# EUROPEAN PATENT APPLICATION

(11) **EP 2 851 904 A2**
(43) Date of publication of application: **25.03.2015**
(21) Application number: 14176403.5
(22) Date of filing: 09.07.2014
(51) Int. Cl.: G21C 9/00, G21C 9/027, G21C 11/02, G21C 13/10, G21C 15/00

(54) **Passive vertical and horizontal plugging assemblies to prevent melt outflow from the containment in case of severe accident in a nuclear power plant**

(30) Priority: 11.07.2013 BG 11153413
(71) Applicant: Kozloduy NPP EAD, 3321 Kozloduy (BG); ATP-Atomtoploproekt Ood, 1113 Sofia (BG)
(72) Inventor: Yurukov, Vladimir Ivanov, 1700 Sofia (BG); Peshev, Evgeni Petrov, 1111 Sofia (BG)
(74) Representative: Benatov, Emil Gabriel

(57) **Abstract**

This invention concerns passive plugging assemblies for prevention of melt outflow on the event of early by-pass of the containment in case of severe accident in a nuclear power plant. The vertical plugging assembly consists of a pipe (1) standing on and fixed to a steel plate (2) and a pipe (3) installed in a concrete structure (4.b). In the pipe (1) there is a plug made of two segments (7.1 and 7.2), fixed to each other by clamps (12.1 and 12.2) and a bioprotection cylinder consisting of two segments (5.1 and 5.2) with a groove (6) and a cable/rope (8). Between pipe (1) and pipe (3) a concrete structure is inlaid. In the segments of the plug there are cavities (10.1 and 10.2) and also a sphere (11), fixed by the cable/rope (8).

The horizontal plugging assembly consists of a pipe (14) in a pipe (13) with a horizontal inclination of α of 6 to 30 degree in a concrete structure (4.x). Rings (15 and 23) welded to the corpus (14), block the conical saddle (16), with a front (17). Between ring (15) and pressure plate (18), with screw and nut (28), there is a spring (19). The closing conical element (20.3) has two cones (20.1 and 20.2). Two connecting rods (21 and 24) are attached to the element by means of the eyes of two retainer screws (25.1 and 25.2), which are screwed in bushings (26.1 and 26.2) respectively. A connecting rod (24) is attached to an element (22), fixed to the pipe (corpus) (14).

## Description

### TECHNICAL FIELD OF THE INVENTION

The passive vertical and horizontal plugging assemblies are applicable in nuclear power industry.

### PRIOR ART

Known in the practice is a passive vertical plugging assembly reducing the harmful impact of gamma radiation in the serviced rooms under the reactor pit. This assembly consists of a vertical cylindrical central pipe standing on a steel plate, with a casing pipe, installed in a concrete structure, being located around the pipe. There is a solid bioprotection cylinder, consisting of two segments made of textolite or teflon, in the lower part of the pipe. There is a central opening/groove, through which a movable cable/rope passes, between the two segments.

A shortcoming of the known passive vertical plugging assembly is that it very weakly prevents the melt outflow on the early by-pass mechanism of the containment in case of severe accident of the nuclear reactor in a Nuclear Power Plant.

No passive vertical plugging assembly is known, which is used in horizontal pipes or pipes close to them (with a relatively small inclination) in the serviced rooms under or at the side of the reactor pit.

The task of the inventions is to create passive vertical and horizontal plugging assemblies that prevent 100% the melt outflow on the early by-pass mechanism of the containment in case of severe accident of the nuclear reactor in a Nuclear Power Plant.

This task is solved by creating:
The passive vertical plugging assembly to prevent the melt outflow on the early by-pass mechanism of the containment in case of severe accident in a Nuclear Power Plant consists of a vertical cylindrical central pipe standing on and fixed to a steel plate. There is a casing pipe, installed in a concrete structure, around the pipe. There is a solid bioprotection cylinder, consisting of two semi-cylindrical segments, in the lower part of the pipe. There is a central opening/groove, in which there is a cable/rope, between the two segments. The space between the casing pipe and the vertical pipe is filled with concrete. Above the bioprotection cylinder made of the two segments, there is a plug made of two segments tightly fixed to each other by clamps. The groove passes also between those two segments. There are voids in those segments, which form respective cavities and whose lower slope of the two segments supports a closing sphere that is laterally fixed by the cable/rope.

The passive vertical plugging assembly to prevent the melt outflow on the early by-pass mechanism of the containment in case of severe accident in a Nuclear Power Plant is characterised by the fact that the segments are temperature-resistant up to 2850°C, and the segments are solid and are made of pure titanium carbide. The fixing clamps are made of elastic steel. The closing sphere is solid and made of pure tungsten carbide. The bioprotection cylinder made of two segments is made of fire-proof concrete with 50% to 96% tabular corundum.

The passive horizontal plugging assembly to prevent the melt outflow on the early by-pass mechanism of the containment in case of severe accident in a Nuclear Power Plant consists of a central, cylindrical pipe that is in a concrete structure with a horizontal inclination at an angle α of 6 to 30 degrees to the horizontal. In the central pipe, there is a corpus in which there is a thrust ring that is welded to the corpus. A thrust ring blocks a conical saddle tightly pressed to it, whose front is conical funnel-shaped, in front of which there is a stopper ring 23 welded to the corpus. Between the thrust ring 15 and the pressure plate there is a charged spring. Between the screw with eye and nut of the pressure plate, by means of the screw with eye and nut and the eye of the retainer screw screwed in a bushing at the spring-side end of the closing element, there is a connecting rod. The closing element is with streamlined truncated cones at its both ends. Its middle part is also a truncated cone with its small base facing the saddle neck. The groove is passable from the inlet of the corpus, through the stopper ring, the saddle, the thrust ring, through the openings of the pressure plate and the end of the corpus. The conical surfaces of the inside of the stopper ring, the front and the inside of the saddle smoothly pass into each other. At the other end of the closing element, near the eye of the retainer screw screwed in a bushing, there is a rod fixed to an anchor element fixed to the corpus.

The passive horizontal plugging assembly to prevent the melt outflow on the early by-pass mechanism of the containment in case of severe accident in a Nuclear Power Plant, the saddle and the closing element are temperature-resistant up to 2850°C, being solid bodies made of pure titanium carbide, the anchor element is fixed to the corpus with silver solder, and the spring is made of stainless steel.

### EXPLANATIONS OF THE ATTACHED FIGURES

Fig. 1 is a cross-section of the passive vertical plugging assembly, in normal operation mode;
Fig. 2 is a cross-section of the passive vertical plugging assembly, in severe accident mode;
Fig. 3 is a cross-section of the passive horizontal plugging assembly, in normal operation mode;
Fig. 4 is a cross-section of the passive horizontal plugging assembly, in severe accident mode.

### DETAILED DESCRIPTION OF THE INVENTIONS

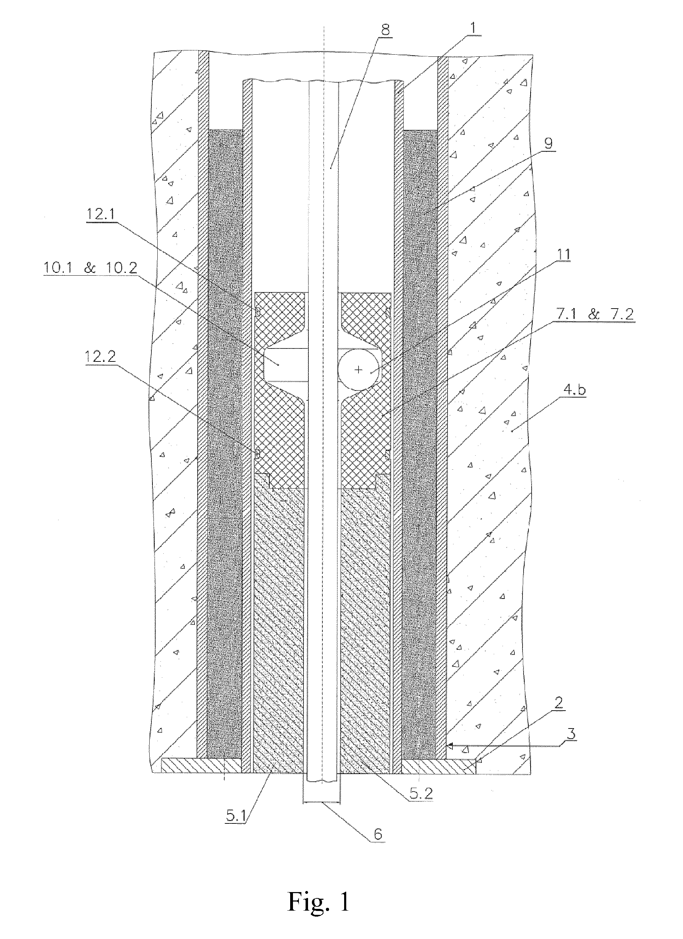

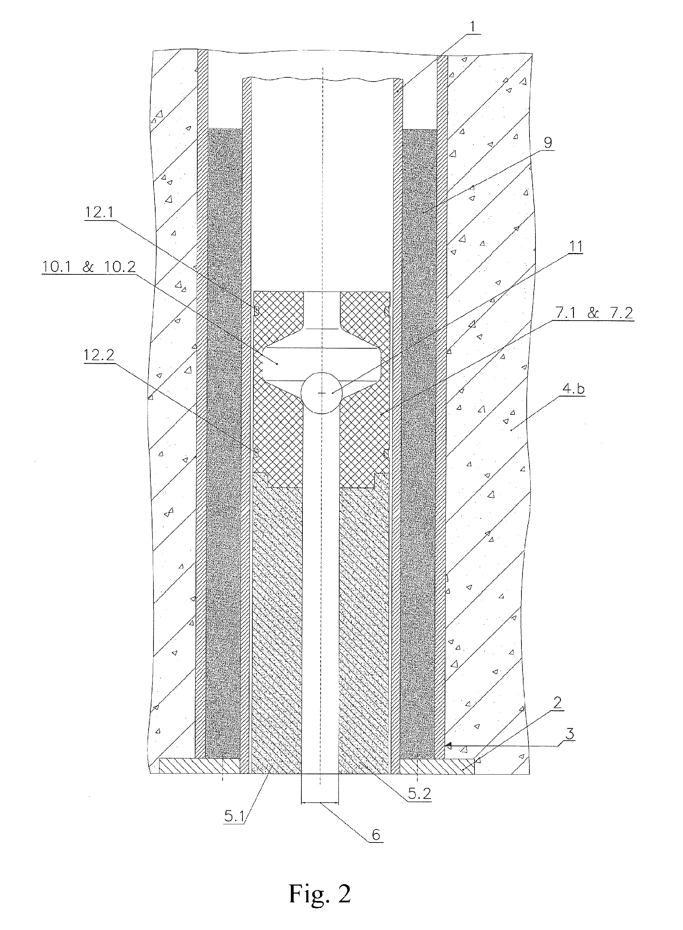

The passive vertical plugging assembly (in Fig. 1 and Fig. 2) to prevent the melt outflow on the early by-pass mechanism of the containment in case of severe accident in a Nuclear Power Plant consists of a vertical cylindrical central pipe 1 standing on and fixed to a steel plate 2. There is a casing pipe 3, installed in a concrete structure 4.b, around the pipe 1. There is a solid bioprotection cylinder, consisting of two semi-cylindrical segments 5.1 and 5.2, in the lower part of the pipe 1. There is a central opening/groove 6, in which there is a cable/rope 8, between the two segments 5.1 and 5.2. The space between the casing pipe 3 and the vertical pipe 1 is filled with concrete 9. Above the bioprotection cylinder made of the two segments 5.1 and 5.2, there is a plug made of two segments 7.1 and 7.2 tightly fixed to each other by clamps 8.1 and 8.2. The groove 6 passes also between those two segments 7.1 and 7.2. There are voids in those segments, which form respective cavities 10.1 and 10.2, whose lower slope of the two segments 7.1 and 7.2 supports a closing sphere 11 that is laterally fixed by the cable/rope 8.

The passive vertical plugging assembly to prevent the melt outflow on the early by-pass mechanism of the containment in case of severe accident in a Nuclear Power Plant is characterised by the fact that the segments 7.1 and 7.2 are temperature-resistant up to 2850°C, the segments 7.1 and 7.2 are solid and are made of pure titanium carbide. The fixing clamps 12.1 and 12.2 are made of elastic steel. The closing sphere 11 is solid and made of pure tungsten carbide. The bioprotection cylinder made of two segments 5.1 and 5.2 is made of fire-proof concrete with 75% to 96% tabular corundum.

The passive horizontal plugging assembly to prevent the melt outflow on the early by-pass mechanism of the containment in case of severe accident in a nuclear power plant consists of a central, cylindrical pipe 13 that is in a concrete structure 4.x with a horizontal inclination at an angle α of 6 to 30 degrees to the horizontal. In the central pipe 13, there is a corpus 14 in which there is a thrust ring 15 that is welded to the corpus 14. A thrust ring 15 blocks a conical saddle 16 tightly pressed to it, whose front 17 is conical funnel-shaped 17, in front of which there is a stopper ring 23 welded to the corpus 14. Between the thrust ring 15 and the pressure plate 18 there is a charged spring 19. Between the screw with eye and nut 28 of the pressure plate 18, by means of the screw with eye and nut 28 and the eye of the retainer screw 25.2 screwed in a bushing 26.2 at the spring 19-side end of the closing element 20, there is a connecting rod 21. The closing element 20 is with streamlined truncated cones 20.1 and 20.2 at its both ends. Its middle part 20.3 is also a truncated cone with its small base facing the saddle 16 neck. The groove is passable from the inlet of the corpus 14, through the stopper ring 23, the saddle 16, the thrust ring 15, through the openings of the pressure plate 18 and the end of the corpus 14. The conical surfaces of the inside of the stopper ring 23, the front 17 and the inside of the saddle 16 smoothly pass into each other. At the other end of the closing element 20, near the eye of the retainer screw 25.1 screwed in a bushing 26.2, there is a rod 24 fixed to an anchor element 22 fixed to the corpus 14.

The passive horizontal plugging assembly to prevent the melt outflow on the early by-pass mechanism of the containment in case of severe accident in a nuclear power plant, the saddle 16 and the closing element 20 are temperature-resistant up to 2850°C, being solid bodies made of pure titanium carbide, the anchor element 22 is fixed to the corpus 14 with silver solder 27, and the spring 19 is made of stainless steel.

### EFFECT OF THE INVENTION

### FOR THE PASSIVE VERTICAL PLUGGING ASSEMBLY IN FIG. 1 AND FIG. 2

While the nuclear reactor operates without accidents in normal operation mode of the Unit, the passive vertical and horizontal plugging assemblies do not affect the nuclear reactor operation.

The passive vertical plugging assembly, in normal operation mode of the nuclear reactor, in no way hinders the operation of the mechanisms - the up/down movement of the cable/rope 8, and does not hinder the functioning of all devices, e.g. ionisation chambers that are placed in the vertical pipe (Fig. 1).

But in case of severe accident, during which there occurs a breach in the reactor pressure vessel of a Nuclear Power Plant, through which melt, formed from the melting of the materials in the core and the vessel internals, is released outside the vessel, which melt, sometime after its spreading on the floor of the reactor pit, corrodes/ablates the concrete along the whole width of the space between the pit walls and the pipe 1 in the concrete structure 4.b. Entering uncontrollably the pipe 1, the melt flows out and falls on the upper surface of the plugging plug with the semi-cylindrical segments 7.1 and 7.2. The melt bums through and breaks off the cable/rope 8, the lower part of which falls, freeing the opening/groove 6 in 7.1/7.2, located along the whole height of the central axis. At this moment, the closing sphere 11, under the action of gravity, rolls down on the sloping surface of the cavity 10.1 and/or 10.2 in 7.1/7.2 on the neck of the opening/groove 6 and blocks it up (Fig. 2). As it is with a specific weight considerably higher than that of the melt entering along the groove 6 and cavity 10.1/10.2, it (the closing sphere 11) cannot come to the surface and thus certainly closes the opening/groove 6. The selected materials of the plug 7.1/7.2 and the closing sphere 11 are high temperature-resistant - up to 2850°C, i.e. they withstand the thermal load exercised by the melt that has hit them. The latter stays in the space above the plug 7.1/7.2 and in the space of its cavity 10.1/10.2, with the heat transfer analyses made showing that, after sometime, it begins to cool down and to solidify. From those analyses becomes clear that the temperature at the lower end of the plug 7.1/7.2 rises considerably, but remains with a sufficiently big margin with respect to (sufficiently below) the critical temperature of thermal stability of the bioprotection cylinder 5.1/5.2 made of special concrete. The special concrete 9 in the space between the vertical pipe 1 and casing pipe 3 impedes the melt from going round (by-passing) the plug 7.1/7.2. This is so because the level of this filling with this concrete 9 along the height is sufficiently above the upper surface of the plug 7.1/7.2. Then, the melt that has penetrated into the groove of pipe 1, even though melting the wall of pipe 1, cannot penetrate into the interspace between pipes 1 and 3. In this way, the melt that has grown cool remains "caught"/stopped for the interval defined as time of the so called early by-pass, with its condition after this depending only on the rate of ablation of the concrete and the geometry of the breach in the reactor pit foundation/base, formed as a consequence of this. Also in this severe accident mode, the plugging vertical assembly is also completely passive.

Under the conditions of severe accident, the plugging vertical assembly does not require human interference nor consumes electric or other power, pneumo-, hydro- or other working medium. The passive vertical plugging assembly only operates under the impact of the melt itself that penetrates into the groove of the vertical pipe 1, i.e. on the principle of the internal self-defence by means of the natural feedback - initiator of the operation is the melt itself, the further movement of which is stopped by the vertical plugging assembly.

### FOR THE PASSIVE HORIZONTAL PLUGGING ASSEMBLY

The passive horizontal plugging assembly, in normal operation mode of the nuclear reactor in a nuclear power plant, in no way hinders the operation of the nuclear reactor mechanisms.

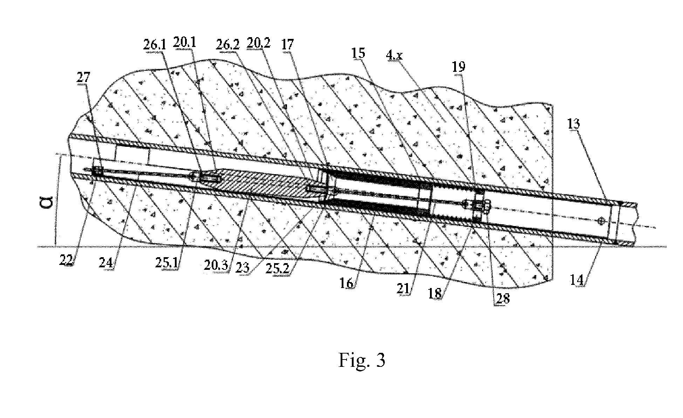

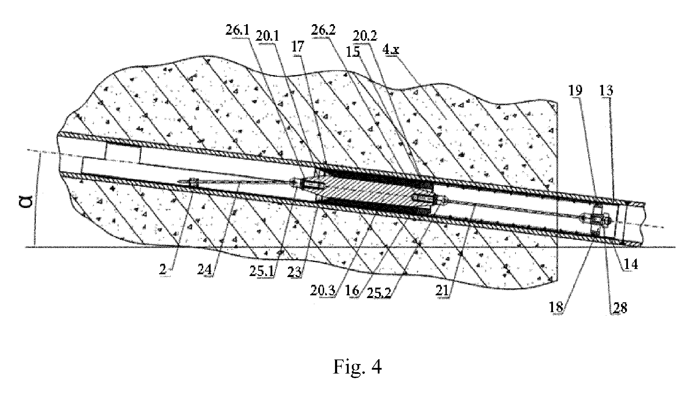

In case of severe accident, during which there occurs a breach in the reactor pressure vessel, through which melt, formed from the melting of the materials in the core and the vessel internals, is released outside the vessel, which melt is spreading on the floor of the reactor pit and without hindrance enters the groove of the through drain from the inlet of the corpus 14, through the stopper ring 23, the saddle 16, the thrust ring 15, through the openings of the pressure plate 18 and the end of the corpus 14. Moving along the slope at an angle α (between 6 and 30 degrees) of the groove of pipe 13, the melt reaches the anchor element 22, where it melts the silver solder 27, in the course of which the connecting element - rod 24, is released. At this moment, the closing element 20, being under the impact of the tensile force of the charged spring 19, by means of the connecting rod 21 attached to the screw with eye and nut 28 for the pressure plate 18, is pulled in the direction of the saddle 16 that is fixed at its both ends to the inside of the corpus 14 by means of the welded thrust ring 15 and the welded stopper ring 23 (Fig. 3). The closing element 20 enters the saddle 16 (Fig. 4), with the value of the tensile force exercised by the spring 19, as well as the respective conical surfaces of 16 and 20 (more specifically the middle part of 20.3 of the closing element 20) being so selected and processed as to ensure tight contact during closing, whereby to guarantee the secure blocking of the way of the melt. The material selected for the closing element 20 and for the saddle 16 is high temperature-resistant - up to 2850°C, i.e. it withstands the thermal load exercised by the melt that has hit them. The latter stays in the space between the inlet of the groove of the drain pipe (part of the horizontal section of which is the pipe 13) and 16 and 20 that have formed a fit, starting after some tome to cool down and solidify. The temperatures at the lower and of the saddle 16, as well as the pipes 13 and 14 in this region rise considerably, but remain with a sufficiently big margin with respect to the critical temperature of thermal stability of the weld material used to fix 15 to 14, i.e. the supporting function of ring 15 is ensured during the whole process of cooling down and solidification of the melt. The melt that has so cooled down remains caught/stopped for the interval defined as time of the early by-pass of the containment wall, with its condition after this depending only on the rate of ablation of the concrete and the geometry of the breach in the reactor pit foundation/base 4.x, formed as a consequence of this. The horizontal plugging assembly is completely passive in normal operation mode of the nuclear reactor, in no way hindering the movement of the drained fluid, i.e. it ensures its passage under the conditions of minimum hydraulic resistance. This is achieved through the position of the closing element 20 that, by means of the anchor element 22 and the selected length of rod 24, is securely fixed at a sufficient distance in front of the saddle 16. Both the geometry of the closing element itself 20, which at its both ends 20.1 and 20.2 is in the shape of a truncated cone, as well as the inner surfaces of the stopper ring 23, the front 17 and the inside of the saddle 16, as well as the specially made openings in the pressure plate 18, smoothly passing into each other, contribute to the good passage.

Under the conditions of severe accident, the plugging horizontal assembly does not require human interference nor consumes electric or other power, pneumo-, hydro- or other working medium. The passive horizontal plugging assembly only operates under the impact of the melt itself that penetrates into the groove of the pipe 13, i.e. on the principle of the internal self-defence by means of the natural feedback - initiator of the operation is the melt itself, the further movement of which is stopped by the vertical horizontal assembly.

The materials from which both the passive vertical and the passive horizontal plugging assembly are made are characterised by their high resistance to strong neutron fluxes - up to 10¹⁶ Bq/m³ volume activity of the air and 10⁶ Gy/h dose rate. Under the conditions of normal operation of the Unit, they are radiation-resistant with big margin with respect to time above the 30-year design service life.

## Claims

1. Passive vertical plugging assembly to prevent the melt outflow on the early by-pass mechanism of the containment in case of severe accident in a nuclear power plant consists of a vertical cylindrical central pipe (1) standing on and fixed to a steel plate (2), with a casing pipe (3), installed in a concrete structure (4.b), being located around the pipe, and in the lower part of the pipe (1) there is a solid bioprotection cylinder, consisting of two semi-cylindrical segments (5.1 and 5.2), and between the two segments (5.1 and 5.2) there is a central opening/groove (6), in which there is a cable/rope (8), **characterised by** the fact that the space between the casing pipe (3) and the vertical pipe (1) is filled with concrete (9), and above the bioprotection cylinder made of the two segments (5.1 and 5.2) there is a plug made of two segments (7.1 and 7.2) tightly fixed to each other by clamps (12.1 and 12.2), with the groove (6) passing between those two segments (7.1 and 7.2), whereby there are voids in those segments, which form respective cavities (10.1 and 10.2), whose lower slope of the two segments (7.1 and 7.2) supports a closing sphere (11) that is laterally fixed by the cable/rope (8).

2. Passive vertical plugging assembly to prevent the melt outflow on the early by-pass mechanism of the containment in case of severe accident in a nuclear power plant according to claim 1, **characterised by** the fact that the segments (7.1 and 7.2) are temperature-resistant up to 2850°C, with the segments (7.1 and 7.2) being solid and made of pure titanium carbide, the fixing clamps (12.1 and 12.2) being made of elastic steel, the closing sphere (11) being solid and made of pure tungsten carbide, and the bioprotection cylinder made of two segments (5.1 and 5.2) being made of fire-proof concrete with 50% to 96% tabular corundum.

3. Passive horizontal plugging assembly to prevent the melt outflow on the early by-pass mechanism of the containment in case of severe accident in a nuclear power plant consisting of a central, cylindrical pipe (13) that is in a concrete structure (4.x) with a horizontal inclination at an angle α of 6 to 30 degrees to the horizontal, with a corpus (14), in which there is a thrust ring (15) that is welded to the corpus (14), being located in the central pipe (13), with a thrust ring (15) blocking a conical saddle (16) tightly pressed to it, whose front (17) is conical funnel-shaped (17), in front of which there is a stopper ring (23) welded to the corpus (14), with a charged spring (19) being located between the thrust ring (15) and the pressure plate (18), with a connecting rod (21) being located between the screw with eye and nut (28) of the pressure plate (18), by means of the screw with eye and nut (28) and the eye of the retainer screw (25.2) screwed in a bushing (26.2) at the spring (19)-side end of the closing element (20), with the closing element (20) being with streamlined truncated cones (20.1 and 20.2) at its both ends, and its middle part (20.3) being also a truncated cone with its small base facing the saddle (16) neck, and the groove is passable from the inlet of the corpus (14), through the stopper ring (23), the saddle (16), the thrust ring (15), through the openings of the pressure plate (18) and the end of the corpus (14), with the conical surfaces of the inside of the stopper ring (23), the front (17) and the inside of the saddle (16) smoothly passing into each other, and at the other end of the closing element (20), near the eye of the retainer screw (25.1) screwed in a bushing (26.2), there being a rod (24) fixed to an anchor element (22) fixed to the corpus (14).

4. Passive horizontal plugging assembly to prevent the melt outflow on the early by-pass mechanism of the containment in case of severe accident in a nuclear power plant according to claim 3, **characterised by** the fact that the saddle (16) and the closing element (20) are temperature-resistant up to 2850°C, with them being solid bodies made of pure titanium carbide, the anchor element (22) being fixed to the corpus (14) with silver solder (27), and the spring (19) being made of stainless steel.
